# EUROPEAN PATENT APPLICATION

(11) **EP 2 434 728 A1**
(43) Date of publication of application: **28.03.2012**
(21) Application number: 11182938.8
(22) Date of filing: 27.09.2011
(51) Int. Cl.: H04L 29/08

(54) **Mobile wireless communications system providing enhanced user interface (ui) content display features and related methods**

(30) Priority: 27.09.2010 US 386658 P
(71) Applicant: Research In Motion Limited, Waterloo, ON N2L 3W8 (CA); Research in Motion Corporation, Wilmington DE 19801 (US)
(72) Inventor: Iyer, Kannan Narayanan, Fremont, CA California 94538 (US); Bhuta, Mahesh, Coral Springs, FL Florida 33071 (US); Doshi, Pankil Parthiv, Fremont, CA California 94538 (US); Talwalkar, Rohit Anil, Sunrise, FL Florida 33323 (US); Schultz, Charles Peter, Sunrise, FL Florida 33323 (US); Bibr, Viera, Kilbride, Ontario L7P 0K1 (CA)
(74) Representative: Roberts, Gwilym Vaughan

(57) **Abstract**

A method for visually rendering data on a display of a mobile device having a native client user interface (UI) may include storing application data on a backend data server without visual attribute formatting associated therewith, and generating visual attribute formatting rules for storage on an application proxy server so that application data retrieved from the backend data server has the visual attribute formatting rules applied thereto. At least one application for the mobile device may be generated that is configured to at least cause the mobile device to retrieve the stored application data having the visual attribute formatting rules applied thereto from the backend data server via the application proxy server, and visually render on the display of the mobile device the retrieved application data having the visual attribute formatting rules applied thereto using the native client UI and without visual attribute formatting by the at least one application.

## Description

### Cross-Reference to Related Applications

This application claims the benefit of U.S. provisional app. no. 61/386,658 filed September 27, 2010, which is hereby incorporated herein in its entirety by reference.

### Technical Field

This application relates to the field of wireless communications, and more particularly, to wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, or other mobile applications. These multi-function devices usually allow electronic mail (email) messages to be sent and received wirelessly, as well as access the Internet via a cellular network and/or a wireless local area network (WLAN), for example.

Typically, different applications are installed on the mobile device that are used to retrieve corresponding types of data. A native or local client user interface (UI) on the mobile device renders visual objects on the mobile device display based upon the different applications and retrieved data.

### Brief Description of the Drawings

FIG. 1 is a schematic block diagram of a communications system in accordance with an example aspect.

FIG. 2 is a flow diagram illustrating method aspects associated with the system of FIG. 1.

FIG. 3 is schematic block diagram of an example implementation of the system of FIG. 1 for providing rich client visual formatting on a mobile wireless communications device.

FIG. 4 is schematic block diagram of an example implementation of the system of FIG. 1 for providing markup language visual formatting on a mobile wireless communications device.

FIGS. 5 and 6 are screen prints of map displays generated in accordance with visual attribute formatting rules in an example implementation of the system of FIG. 1.

FIG. 7 is a screen print of a direction display generated in accordance with visual attribute formatting rules in an example implementation of the system of FIG. 1.

FIG. 8 is a screen print of a calendar event generated in accordance with visual attribute formatting rules in an example implementation of the system of FIG. 1.

FIG. 9 is a schematic block diagram illustrating components of a mobile wireless communications device which may be used in various example embodiments.

### Detailed Description

The present description is made with reference to the accompanying drawings, in which example embodiments are shown. However, many different embodiments may be used, and thus the description should not be construed as limited to the embodiments set forth herein. Like numbers are refer to like elements throughout, and prime notation is used to similar elements in different embodiments.

Generally speaking, a method for visually rendering data on a display of a mobile wireless communication device having a native client user interface (UI) is provided. The method may include storing application data on a backend data server without visual attribute formatting associated therewith, and generating a visual attribute formatting rules for storage on an application proxy server so that application data retrieved from the backend data server has the visual attribute formatting rules applied thereto. The method further includes generating at least one application for the mobile wireless communications device configured to at least cause the mobile wireless communications device to retrieve the stored application data having the visual attribute formatting rules applied thereto from the backend data server via the application proxy server, and visually render on the display of the mobile wireless communications device the retrieved application data having the visual attribute formatting rules applied thereto using the native client UI and without visual attribute formatting by the at least one application. Accordingly, this may provide desired flexibility in rendering various types and combinations of information without having to configure the mobile device application for visual formatting of retrieved data.

More particularly, the at least one application may comprise a plurality of different applications for the mobile wireless communications device, and the visual attribute formatting rules may comprise a respective different set of visual attribute formatting rules for each of the different applications. By way of example, the visual attribute formatting rules may comprise at least one of rich client formatting rules or markup language formatting rules. Also by way of example, the application data may comprise extensible markup language (XML) data. In some example embodiments, the at least one application may be further configured to cause the mobile wireless communications device to generate response information for the backend data server using key-value pairs.

One example visual attribute formatting rule is an active label rule. Another example visual attribute formatting rule is a button component rule. Still another example visual attribute formatting rule is a text component rule. Yet another example visual attribute formatting rule is a dropdown component rule. Another example visual attribute formatting rule is a checkbox component rule. An additional example visual attribute formatting rule is a contact component rule. Another example visual attribute formatting rule is a map component rule. An additional example visual attribute formatting rule is a calendar event component rule.

A related communications system may include a backend data server configured to store application data without visual attribute formatting associated therewith, and an application proxy server configured to store and apply visual attribute formatting rules to application data retrieved from the backend data server. The system may further include a mobile wireless communications device comprising a display and having a native client UI. The mobile wireless communications device may be configured to at least retrieve the application data having the visual attribute formatting rules applied thereto from the application proxy server based upon an application on the mobile wireless communications device, and visually render on the display the retrieved application data having the visual attribute formatting rules applied thereto using the native client UI and without visual attribute formatting by the at least one application.

By way of background, mobile application or "app" developers may need to process data from enterprise backend servers, and ultimately render information on a mobile wireless communications device (also referred to as a "mobile device" herein) screen. This information may be pushed to the mobile device when new content is available. Yet, it may be a relatively complex task for a developer to design and arrange screens for a wide variety of pushed content payloads, screen sizes and resolutions. The speed at which a developer can provide a solution may be slowed by coding the UI details. Likewise, changing the UI to accommodate new payloads or UI requirements may be costly. In addition, backend enterprise server data is typically provided in a basic markup language format, such as extensible markup language (XML). This format does not include information about how the data will be visually presented on a smartphone or other type of handset.

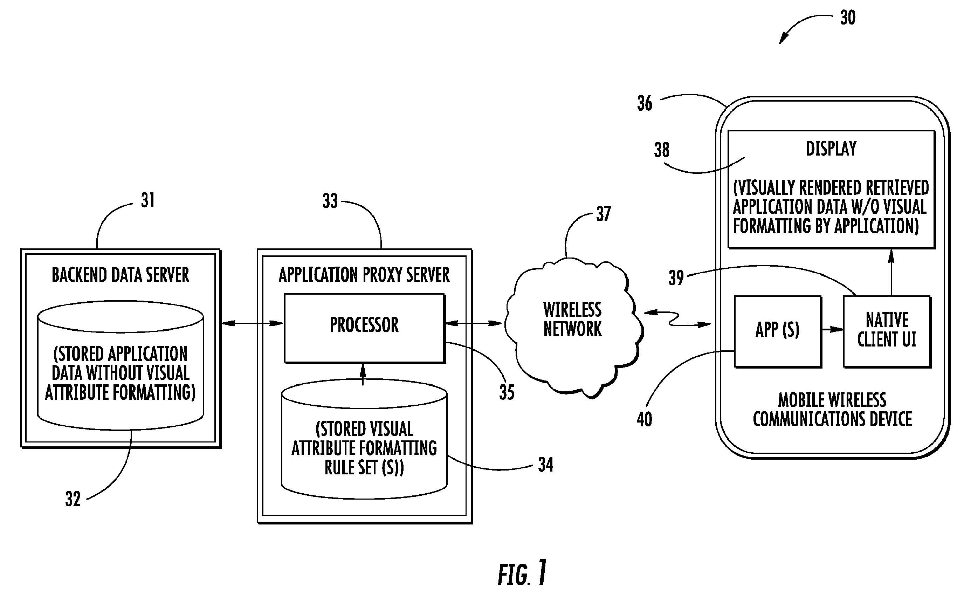

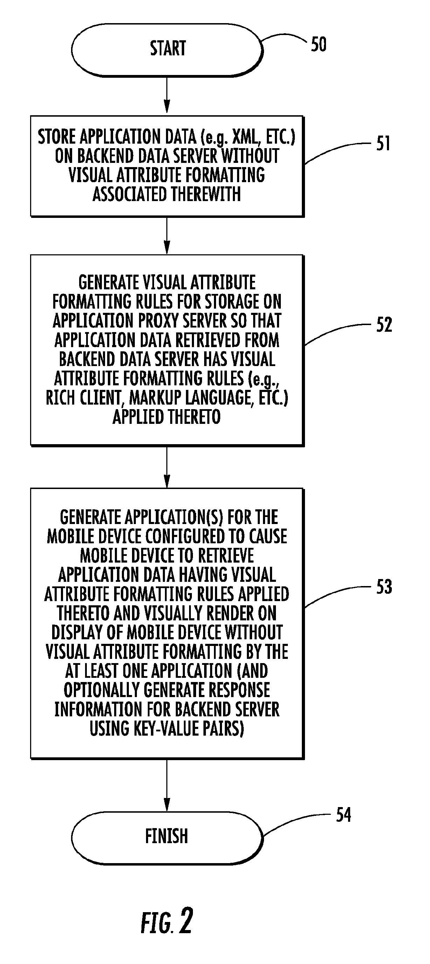

Turning now to FIGS. 1 and 2, a communications system **30** and associated method aspects are first described. The system **30** illustratively includes a backend data server **31** configured to store application data (e.g., in a database **32**) without visual attribute formatting associated therewith, at Blocks **50-51.** By way of example, the application data may comprise backend enterprise data (e.g., XML) data, as discussed above. Considered in other terms, the application data typically includes the information to be displayed (e.g., names, dates, numbers, etc.), but not formatting details as to how the data is to be visually displayed (e.g., in a list, drop-down box, button, etc.). In many instances it is desirable for data providers to format backend application data in this way (i.e., generically without visual formatting information), as it allows the data to be used across different platforms or devices that have different visual rendering characteristics.

The system **30** further illustratively includes an application proxy server **33,** which further includes a database **34** configured to store visual attribute formatting rules, and a processor **35** configured to apply the visual attribute formatting rules to application data retrieved from the backend data server **31,** at Block **52,** as will be discussed further below. The backend data server **31** may communicate with the application proxy server **33** via a local area network (LAN), wireless data network, the Internet, etc., and they may be remotely located or co-located depending on a given implementation. In accordance with one example, the backend data server **31** may be provided by a mobile application developer, while the application proxy server may be provided by a mobile service provider (e.g., a cellular network provider or mobile device manufacturer).

The system **30** also illustratively includes a mobile device **36** which communicates with the application proxy server ***33** via a wireless network **37** (e.g., a cellular network, wireless LAN, etc.). The mobile device **36** illustratively includes a display **38** and has a native client UI **39** and one or more mobile device applications or "apps" resident thereon. More particularly, the native client UI **39** and applications **40** may be implemented using a combination of hardware components (e.g., microprocessor, memory, etc.) and software components (e.g., computer-executable instructions stored on a computer-readable medium). Example mobile devices 36 may include portable or personal media players (e.g., music or MP3 players, video players, etc.), portable gaming devices, portable or mobile telephones, smartphones, tablet computers, digital cameras, etc.

The mobile device **36** may be configured to retrieve application data having the visual attribute formatting rules applied thereto from the application proxy server **33** based upon the application **40,** and visually render on the display **38** the retrieved application data having the visual attribute formatting rules applied thereto using the native client UI **39,** and without visual attribute formatting by the application, at Block **53,** which concludes the method illustrated in FIG. 2 (Block **54).** Accordingly, the application **40** need not include visual attribute formatting rules, which may advantageously help simplify the application development process, and potentially conserve memory and processing resources of the mobile device **36** as well. Moreover, by storing and implementing the visual attribute formatting rules at the application proxy server **33** as opposed to the mobile device **36,** this may advantageously make it easier to update visual attribute display characteristics since such updates need not be provided or pushed to all of the mobile devices that have the given application **40** installed thereon.

Moreover, as noted above, a plurality of different applications **40** may be provided on the mobile device **36,** in which case the visual attribute formatting rules may comprise a respective different set of visual attribute formatting rules for each of the different applications. However, in some instances different applications may share a common set of visual attribute formatting rules. Here again, this advantageously allows application developers to update the way in which visual attribute formatting occurs for multiple different applications by uploading the appropriate rules to a single, central application proxy server **33.**

More particularly, the application proxy server **33** functions as an intermediate server that may be used to process the information sent from the backend data server **31** to the mobile device **36** that runs the application **40** designed to consume, render, or act on the information. Using the application proxy server **33** to enhance or augment this data by altering or adding attributes that provide information about how the data should be rendered (i.e., through the use of the visual attribute formatting rules) allows the application **40** or the native client UI **39** on the mobile device **36** to be "thinner" and more flexible in rendering various types and combinations of information - even those not present at the time of the original development of the client application.

In an example implementation, which will be discussed in greater detail below, leaf nodes of the application data feed may be obtained, an element name may be used or inserted as a label by the application proxy server **33,** and an element value may be used as the value to be displayed by the native client UI **39.** A mapping of attribute types to UI elements may provide conversion of the feed to a format that is sent to the native client UI, which then uses the new markup to determine how to render each field on the mobile device **36.**

By way of example, a field may be rendered as a list of items in a pull down menu, or it may be rendered as a button. A "content type" attribute may indicate whether the information should be rendered as HTML, or presented in a rich client interface, for example. HTML content may be rendered in a browser field in this case, as opposed to using UI elements specific to the mobile device widgets or native client UI elements. Additionally, when information is entered on the mobile device **36** or the native client UI is used, response information may be sent via key-value pairs to the application proxy server **33,** and converted to a payload in a format (e.g., XML) known to the backend data server **31** (Block **53**).

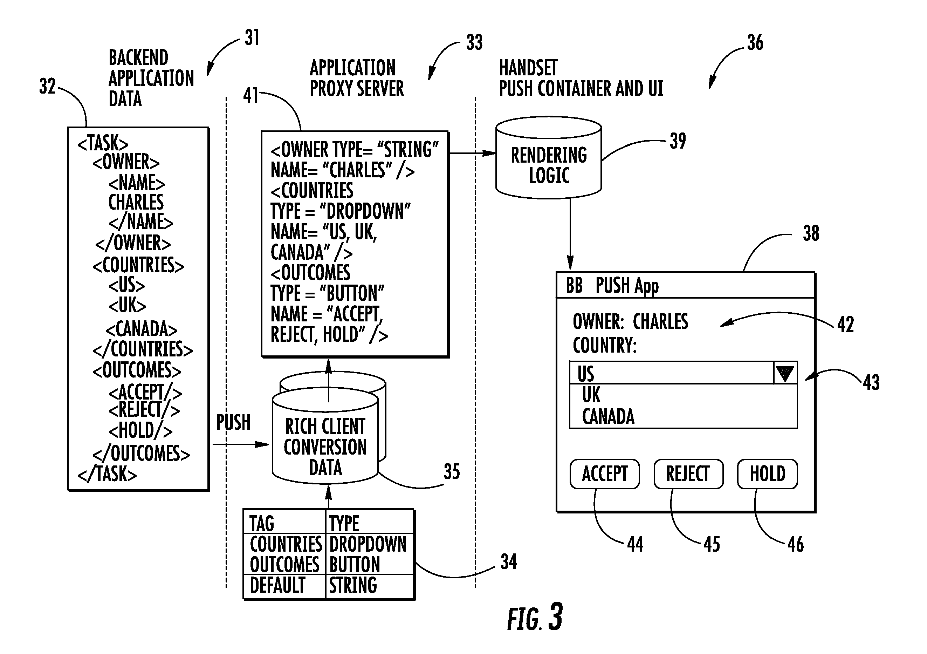

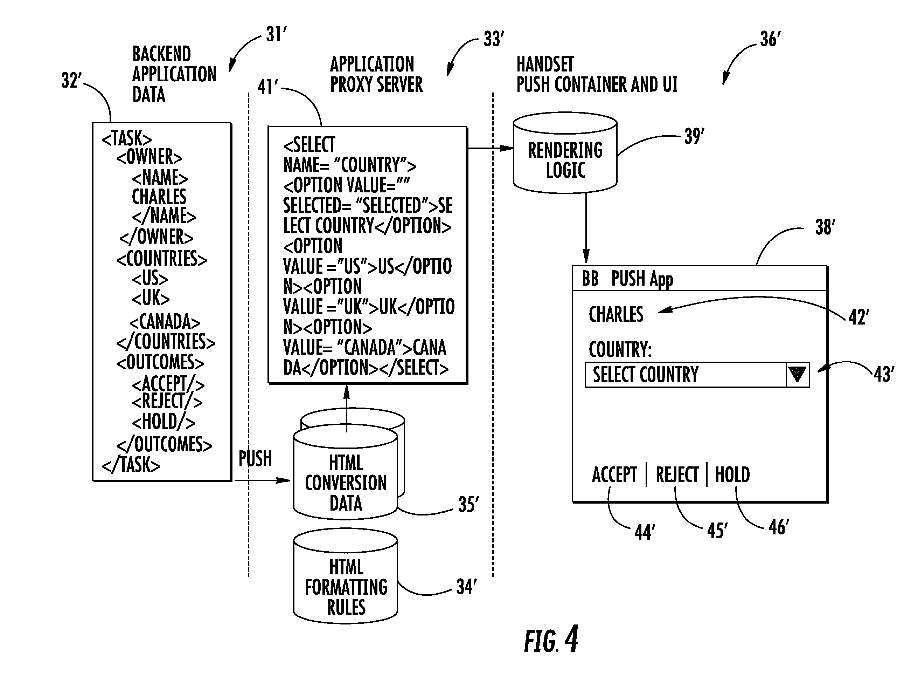

Example processing for rich client styles and markup language systems will now be described respectively with reference to FIGS. 3 and 4, respectively. These example aspects are presented in the context of the BlackBerry^{®} mobile wireless communications platform from Research In Motion Limited with respect to a BlackBerry^{®} (BB) push application. However, it will be appreciated that the various example aspects set forth herein and in the attached appendices may be used or implemented with other mobile wireless communications systems and platforms as well. Moreover, it should also be noted that the same mobile device **36** may be capable of processing and rendering rich client data for some applications **40** and markup language (e.g., HTML, etc.) for other applications, as well as being sourced by the same or different backend data servers **31.**

Referring first to the example shown in FIG. 3, the backend application data from the database **32** comprises XML data that is formatted with a plurality of data field tags. The illustrated backend application XML data set is as follows:

```
    <Task>
         <Owner>
             <Name>
             Charles
             </Name>
         </Owner>
         <Countries>
             <US>
             <UK>
              <Canada>
         </Countries>
         <Outcomes>
              <Accept />
              <Reject />
              <Hold />
         </Outcomes>
     </Task>
```

This example data set represents a form to be displayed on the display 38 for data entry by a user (i.e., to select a country of residence for the user). This form is delineated by "Task" tags (i.e., an open task tag "<Task>" and a close task tag "</Task>"), and includes owner information (delineated by "Owner" and "Name" tags) which provides the owner's (or user's) name, country information (delineated by "Countries" tags) providing available country selection choices, and outcome information (delineated by "Outcomes" tags) providing for potential outcomes or actions (i.e., accepting the data, rejecting the data, or holding the data).

The backend application information is pushed to the application proxy server **33** (although it may be "pulled" in other embodiments) for conversion processing to format the backend application data for display in a rich client format. More particularly, the rich client visual formatting rules may be stored in the data base **34,** which may be conceptually considered as a look-up table. In the illustrated look-up table, a "countries" tag is mapped to a rich client "dropdown" type, an "outcomes" tag is mapped to a rich client "button" type, and all other tags within a task are considered as "default" tags and are mapped to a rich client "string" type. The processor **35** uses these formatting rules to format the backend data as shown in the box **41**, i.e., with corresponding dropdown, button, and string format types, and as reproduced below:
<Owner type="string" name="Charles" />
<Countries type="dropdown" name="US, UK, Canada" />
<Outcomes type="button" name="Accept, Reject, Hold" />

When this formatted data is pushed to the mobile device **36** (which is referred to as a "handset" in FIGS. 3 and 4), it may be directly rendered by the native client UI **39** (labeled "rendering logic" in FIG. 3), without the necessity for additional rich client formatting by the particular application **40** that requested the data in the first place. That is, the application **40** may be "thinner" in that it does not have to include such rich client formatting rules to format retrieved data for the native client UI **39,** as they are instead stored on and implemented by the intermediate application proxy server **33.** Moreover, the application proxy server **33** typically will have a computational advantage in that it may perform the visual formatting data conversions more rapidly than the mobile device **36.** Having such conversions performed by the application proxy server **33** also advantageously helps reduce the number of processing cycles and battery power consumption required by the mobile device **36.** As shown on the display **38,** the owner information is formatted as a text string **42,** the country information is formatted in a dropdown list **43,** and the outcomes are formatted as an accept button **44,** a reject button **45,** and a hold button **46.**

A similar example is provided in FIG. 4, where the same backend data set noted above is formatted in a markup language format (here HTML, although other markup language formats may also be used in other embodiments), rather than the rich client format. HTML visual formatting rules are stored in the database **34'** and used by the processor **35'** to perform HTML formatting of the backend application data set. More particularly, instead of formatting the various XML data tags as respective rich text types as described above, the processor **35**' formats the various data items as appropriate types of "option" tags, as shown in block **41'** and reproduced below:
<select name="Country">
<option value="" selected="selected">Select Country</option>
<option value="US">US</option>
<option value="UK">UK</option>
<option value="Canada">Canada</option>
</ select>
The native client UI **39'** rendering logic for HTML pages accordingly generates on the display **38'** an appropriate form including name text **42**', a drop down menu **43',** and respective hyperlinks **44', 45',** and **46'** for the "accept", "reject", and "hold" outcomes, as opposed to buttons in the rich client example of FIG. 3.

Various examples of visual formatting rules that developers may provide to the application proxy server **33** are now described. That is, an application developer provides the application proxy server **33** with the appropriate formatting rules so that the incoming backend application data it provides to the application proxy server **33** may advantageously be formatted appropriately for native client UIs on different mobile devices. However, it will be appreciated that the techniques described herein may also be used with other wireless communications systems and devices.

The application developer (which may be the mobile device manufacturer or a third-party developer) provides visual formatting rules that allow the application proxy server **33** to parse and display the appropriate UI content on the push container and details screen of the mobile device. A first example is for container screen elements and attributes. For example, if the backend application XML data is as follows:

```
 <Tasks>
  <Task>
    <taskld> 3423424233</taskld>
    <type>LeaveManagment </type>
    <subject> Application for Leave</subject>
    <author>
      <name>John Doe </name>
    </author>
    <created-date> [date] </created-date>
    ...
  </Task>
 tasks>
```

The above would be enhanced by the application proxy server **33** to:

```
 <Tasks>
 <Task>
    <taskId containerField="ID"> 3423424233</taskId>
    <type>LeaveManagment <Itype>
    subject containerField"Title"> Application for Leave</subject>
    <author>
      <name containerField="Text1">John Doe </name>
    </author>
    <created-date containerField="Text2"> [date] </created-date>
    ...
 </Task>
 <task>
```

This would then be rendered by the native client UI as follows:

| Application for Leave | |
|---|---|
| John Doe | [date] |

Another example is a label attribute. By default, elements may be laid out as a label name and its value as the text corresponding to the label. For example:
<first_name>John</first_name>
<tast_name>Doe</[ast_name>
would be laid out as

| | |
|---|---|
| first_name | John |
| last_name | Doe |

To override this default behavior and give some more meaningful label name, the "label" attribute may be used. For example:
<first_name label='First Name">dohn</first_name>
<last_name label="Last Name">Doe</last name>
would be laid out as

| | |
|---|---|
| First Name | John |
| Last Name | Doe |

A next example is an active label component type. By default, all information may be assumed to be labels, as noted above. If the label value is an email, phone, URL, etc., and the developer desires to add more rich formatting, such as opening respective applications based on which label is clicked, then an activeLabel component type may be used. For example:
<Work Email>jDoe@abc.com</ Work Email>
would be laid out as

| | |
|---|---|
| Work Email | jDoe@abc.com |

Clicking on it will have no effect by default, but the syntax below may be used by a developer to make the label active. For example:
<component type="activeLabel">
<Work Email>jDoe@abc.com</ Work Email>
</component>
Now clicking on this label will invoke menu items related to email. To change or override the default label, the label attribute may be used as set forth below. For example:
components type=" activeLabel">
< Work Email label="Office Email"> jDoe@abc.com </ Work Email >
</component>
would be laid out as:

| | |
|---|---|
| Office Email | jDoe@abc.com |

Another example is a button component type formatting rule. For example:
<accept>0001<laccept>
<reject>0002</reject>
would be laid out as

| | |
|---|---|
| accept | 0001 |
| reject | 0002 |

To override this default label behavior and instead treat these items as buttons, they may be wrapped under a component element and the type attribute may be used to set the component type. For example:
<component type="button">
<accept >0001 </accept>
<reject>0002</rej ect>
</component>
would be laid out as an "accept" button and a "reject" button. Again, to change or override the default label, the label attribute may be used. For example:
component type="button">
<accept label#"Accept">0001 <laccept>
<reject label="Reject">0002</reject>
</component>
would be laid out as an "Accept" button and a "Reject" button.

Still another example is a "more" button component type. This is an extension of the above-noted buttons. When clicked, the "more" button would select a designated URL and supply an ID of the message whose "more details" are to be retrieved. For example:
<component type-"button" >
<Details label="More..." url="http://www.XYZ.com?td-12345&source-XYZ"></Detaits>
<Background url="http://www.XYZ.com/background?id= I 2345&source=XYZ"> </Background>
</component>
would be laid out as a "More..." button and a "Background" button. Upon clicking the "More..." button, a GET request would be made to the URL "http://www.XYZ.com?id=12345&source=XYZ" and results would be parsed and shown as key-value pairs in a new screen. Similarly, upon clicking the "Background" button, a GET request would be made to the URL "http://www.XYZ.com/background? id=12345&source=XYZ" and results would be parsed and shown as key-value pairs in a new screen.

Still another example is a text component type. By default, the following example:
<Name>John Doe</Name>
would be laid out as:

| | |
|---|---|
| Name | John Doe |

To override this default label behavior and treat them as textboxes, these items may be designated as component elements and the type attribute may be used to set the component type. For example:
<componenttype="textbox">
<Name>John Doe</Name>
</component>
would be laid out as "Name" followed by a "John Doe" button. To change the default label, the label attribute may be used as set forth below. For example:
<component type="textbox">
<Name label="Full Name">John Doe</Name>
</component>
would be laid out as "Full Name" followed by a "John Doe" button.

To display elements in a dropdown, a component element designation may be used, with the type attribute set to dropdown. For example:
<component type="dropdown" label="Countries">
<option name="US">United States</ option>
<option name="CA" selected="true">Canada</ option>
<option name="IN">India</ option>
</component>
would be laid out as a dropdown box with "United States", "Canada", and "India" as selection options. A "selected" attribute may be used to show or highlight a specific value by default.

Another example is a contact component type. This component type is used to add a contact into the BlackBerry address book upon push of a workflow. For example:
<component type="contact">
<fname>Kannan</ fname >
<mname> </ mname >
<Iname>I</Iname>
<street>1200 Sunrise Blvd.<Istreet>
<city>Sunrise</city>
<state>FL</state>
<postalCode>33323</postalCode>
<country>US</country>
<phone>9549790790</phone>
<fax>9549790790</fax>
<email>kiyer@rim.com</email>
<components>
would be laid out as below in the details screen, while the whole contact including other details above would be added to the BlackBerry Address Book. **name:** Kannan I **phone:** 9549790790 **email:** kjyer@rim.corn **fax:** 9549790790 Moreover, clicking on the name "Kannan I" would directly open up the contact in the address book.

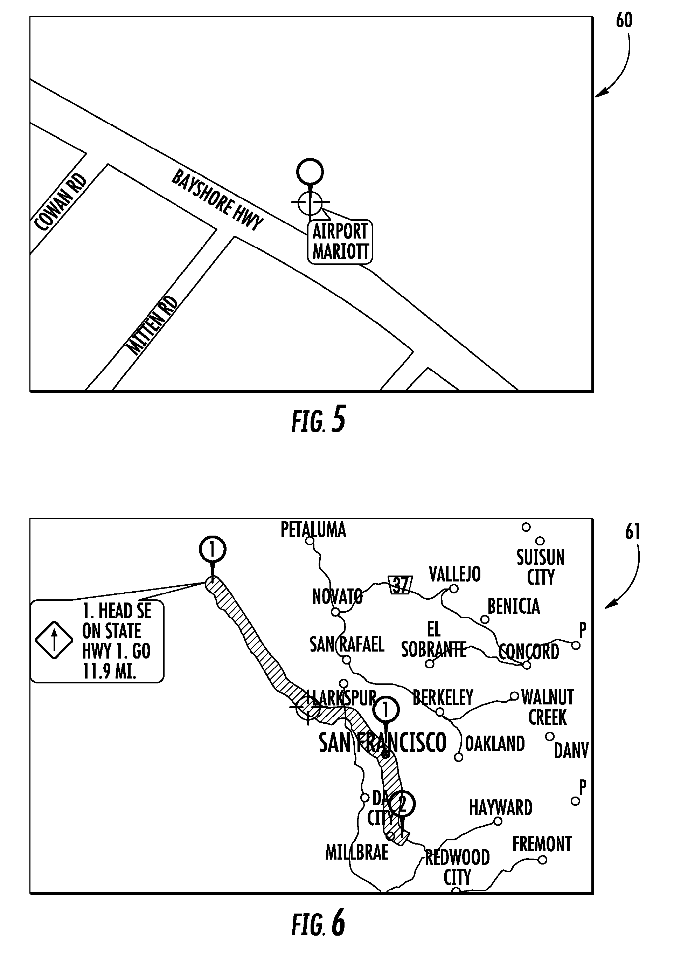

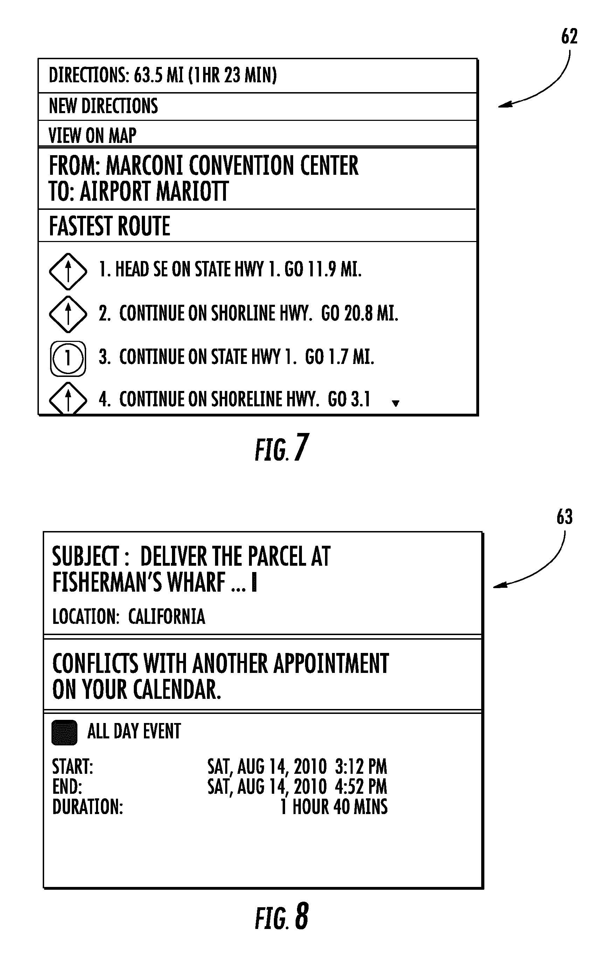

Still another example is a map or GPS component type, which may be used to display Map It! and Route It! buttons in the details screen and launch BlackBerry Maps for location and routing directions respectively. The application proxy server **33** may advantageously geocode the contact address and send the resultant values to this component. For example:
<component type="gps">
<longitude>-122.371520</longitude>
<latitude>37.602807</latitude>
<description>Airport Mariott</description>
</component>
would be laid out as a "Map It!" button and a "Route It!" button. Clicking on the "Map It!" button would generate a BlackBerry Map map screen **60** as seen in FIG. 5. Clicking on "Route It!" would generate a map screen **61** as shown in FIG. 6, and a direction screen **62** as shown in FIG. 7.

Another example is an event component type. This component type may be used to add an event into the BlackBerry Calendar upon push of a workflow. For example:
<component type="event">
<Summary> Deliver the parcel at Fisherman's wharf summary>
<Location>Caiifornia</Location>
<Start>1281811334879</Start>
<End>1281817334879</End>
</component>
would be laid out set forth below in a details screen:

### Summary:

Deliver the parcel at Fisherman's wharf ... **Location: California** Clicking on the summary above would open up a detail screen **63** of the event in the BlackBerry Calendar as shown in FIG. 8.

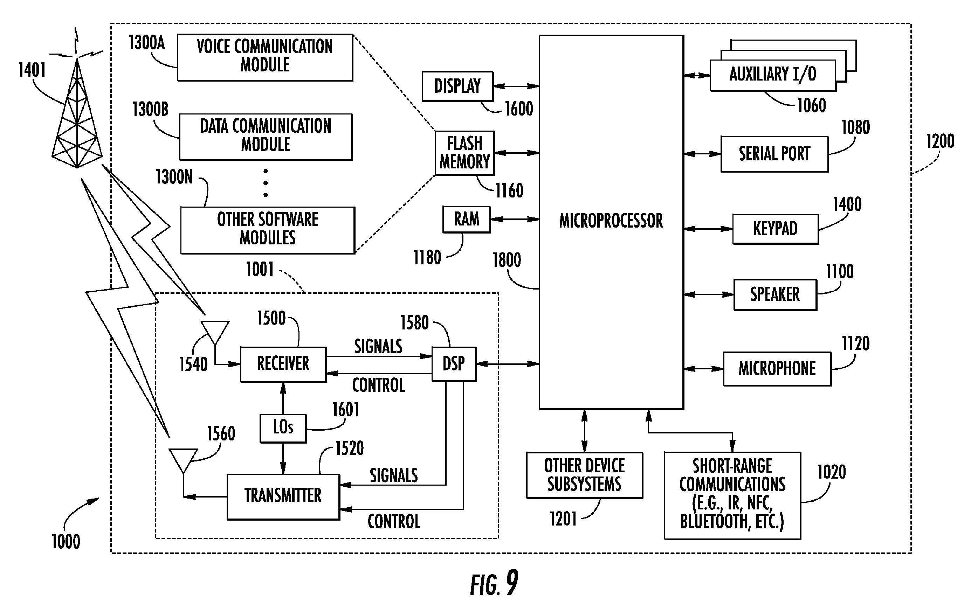

Various components of an example mobile device **1000** that may be used with the above described systems are now described with reference to FIG. 9. The device **1000** illustratively includes a housing **1200,** a keypad or keyboard **1400** and an output device **1600.** The output device shown is a display **1600,** which may comprise a full graphic LCD or other suitable display type, and may be a touchscreen display in some embodiments. Other types of output devices may alternatively be utilized.. A processing device **1800** is contained within the housing **1200** and is coupled between the keyboard **1400** and the display **1600.** The processing device **1800** controls the operation of the display **1600,** as well as the overall operation of the mobile device **1000,** in response to actuation of keys on the keyboard **1400.**

The housing **1200** may be elongated vertically, or may take on other sizes and shapes (including clamshell housing structures). The keyboard may include a mode selection key, or other hardware or software for switching between text entry and telephony entry.

In addition to the processing device **1800,** other parts of the mobile device **1000** are shown schematically in FIG. 9. These include a communications subsystem **1001;** a short-range communications subsystem **1020;** the keyboard **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem 1001 also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP 1580 provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keyboard **1400** and/or some other auxiliary I/O device 1060, such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem **1020** may include an infrared device and associated circuits and components, NFC or a Bluetooth^{™} communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A method for processing data for visually rendering on a display of a mobile wireless communication device having a native client user interface (UI), the method comprising:
storing application data on a backend data server without visual attribute formatting associated therewith;
generating visual attribute formatting rules for storage on an application proxy server so that application data retrieved from the backend data server has the visual attribute formatting rules applied thereto; and
generating at least one application for the mobile wireless communications device configured to at least cause the mobile wireless communications device to retrieve the stored application data having the visual attribute formatting rules applied thereto from the backend data server via the application proxy server, and visually render on the display of the mobile wireless communications device the retrieved application data having the visual attribute formatting rules applied thereto using the native client UI and without visual attribute formatting by the at least one application.

2. The method of Claim 1 wherein the at least one application comprises a plurality of different applications for the mobile wireless communications device; and wherein the visual attribute formatting rules comprise a respective different set of visual attribute formatting rules for each of the different applications.

3. The method of Claim 1 wherein the visual attribute formatting rules comprise rich client formatting rules.

4. The method of Claim 1 wherein the visual attribute formatting rules comprise markup language formatting rules.

5. The method of Claim 1 wherein the application data comprises extensible markup language (XML) data.

6. The method of Claim 1 wherein the visual attribute formatting rules comprise at least one of an active label rule, a button component rule, a text component rule, a dropdown component rule, a checkbox component rule, a contact component rule, a map component rule, or a calendar event component rule.

7. The method of Claim 1 wherein the at least one application is further configured to cause the mobile wireless communications device to generate response information for the backend data server using key-value pairs.

8. A communications system comprising:
a backend data server configured to store application data without visual attribute formatting associated therewith;
an application proxy server configured to store and apply visual attribute formatting rules to application data retrieved from said backend data server; and
a mobile wireless communications device comprising a display and having a native client user interface (UI), the mobile wireless communications device configured to at least
retrieve the application data having the visual attribute formatting rules applied thereto from said application proxy server based upon an application on the mobile wireless communications device, and visually render on said display the retrieved application data having the visual attribute formatting rules applied thereto using the native client UI and without visual attribute formatting by the at least one application.

9. The system of Claim 8 wherein the at least one application comprises a plurality of different applications; and wherein the visual attribute formatting rules comprise a respective different set of visual attribute formatting rules for each of the different applications.

10. The system of Claim 8 wherein the visual attribute formatting rules comprise rich client formatting rules.

11. The system of Claim 8 wherein the visual attribute formatting rules comprise markup language formatting rules.

12. The system of Claim 8 wherein the application data comprises extensible markup language (XML) data.

13. The system of Claim 8 wherein the visual attribute formatting rules comprise at least one of an active label rule, a button component rule, a text component rule, a dropdown component rule, a checkbox component rule, a contact component rule, a map component rule, or a calendar event component rule.

14. The system of Claim 8 wherein said mobile wireless communications device is further configured to generate response information for the backend data server using key-value pairs based upon the at least one application.
